# EUROPÄISCHE PATENTSCHRIFT

(11) **EP 1 452 396 B1**
(45) Veröffentlichungstag und Bekanntmachung des Hinweises auf die Patenterteilung: **18.01.2006**
(21) Anmeldenummer: 03027223.1
(22) Anmeldetag: 28.11.2003
(51) Int. Cl.: B60R 13/02

(54) **Vorrichtung zum Festlegen einer Himmelverkleidung an einem geformten Himmelelement**
Device for fixing a decorative roof trim to a preformed roof liner
Dispositif pour fixer un revêtement décoratif à une garniture de pavillon préformée

(30) Priorität: 26.02.2003 DE 10308082
(43) Veröffentlichungstag der Anmeldung: 01.09.2004
(73) Patentinhaber: Dr.Ing. h.c.F. Porsche Aktiengesellschaft, 70435 Stuttgart (DE)
(72) Erfinder: Luik, Klaus, 75417 Muehlacker (DE); Reder, Gerhard, 71297 Mönsheim (DE)

(56) Entgegenhaltungen:
- US-A- 4 718 714
- US-A- 4 923 245
- US-A- 5 108 147

## Beschreibung

Die Erfindung bezieht sich auf eine Vorrichtung zum Festlegen einer Himmelverkleidung nach dem Oberbegriff des Anspruchs 1. Eine solche Vorrichtung ist aus der US-A-4 718 714 bekannt.

Aus der DE 196 41 665 A1 ist ein Klemmrahmen für eine Innenbespannung zur Verwendung bei Fahrzeugen mit Schiebedach bekannt Der Klemmrahmen besteht aus einem Winkelprofil und weist gerade Abschnitte und eckseitig ausgerundete Abschnitte auf und ein sogenannter Fahrzeughimmel ist über einen aufrechten Schenkel des Klemmrahmens gezogen und wird geklemmt zwischen dem Fahrzeugdach und dem Schenkel gehalten.

Aufgabe der Erfindung ist es, eine Vorrichtung zum Festlegen einer Verkleidung aus Leder, Kunstleder oder Kaschierung in einem Ausschnitt für ein Schiebedach zu schaffen, mit dem ein dem Kantenverlauf des Ausschnitts folgendes Verbinden gewährleistet ist.

Diese Aufgabe wird erfindungsgemäß durch die Merkmale des Patentanspruchs 1 gelöst. Weitere vorteilhafte Merkmale beinhalten die Unteransprüche.

Die mit der Erfindung hauptsächlich erzielten Vorteile bestehen darin, daß insbesondere in den ausgerundeten Eckbereichen des Ausschnitts ein geformtes Himmelelement ein paßgenaues Anliegen an den Ausschnittskanten erfolgt. Dies wird in vorteilhafter Weise erreicht, indem eckseitig des ausgerundeten Ausschnitts des Himmelelements Klemmstücke an der Außenseite des Elements angeordnet sind, welche aus einem Winkelprofil bestehen und zwischen einem hochgestellten Schenkel des Profils und dem hochgestellten Rand des Dachausschnitts die Himmelverkleidung gehalten wird.

Damit die Verkleidung bzw. das Dekor vorgespannt gehalten werden kann, ist nach der Erfindung vorgesehen, daß das Klemmstück in seinem Schenkel jeweils dem hochgestellten Rand des Himmelelements zugerichtete Zacken aufweist, in welche das Dekor, dem eckseitig ausgerundeten Formverlauf des Ausschnitts anliegend folgend, gehalten ist Die Zacken am Schenkel des Klemmstücks durchgreifen das Dekor und halten es in einer unveränderten Position, wobei auch eine Wärmebeeinflussung an dieser befestigten Position des Dekors nichts ändert.

Eine Fesbegung der Klemmstücke am geformten Himmelelement kann entweder direkt oder unter Zwischenschaltung eines Klemmrahmens erfolgen. Zur Befestigung am Klemmrahmen ist das Klemmstück mit dem Himmelelement unter Zwischenschaltung eines am Himmelelement befestigten Klemmrahmens verbunden, der mehrere umbiegbare Befestigungslaschen umfaßt, die korrespondierend mit Schlitzen des Klemmstücks angeordnet sind. Desweiteren können wenigstens an einem gerade verlaufenden Randbereich des Ausschnitts gerade Klemmstücke verwendet werden und an den ausgerundeten Eckabschnitten des Ausschnitts können Klemmstücke eingesetzt werden, die etwa einen Viertelkreisbogen bilden. Hierdurch wird, falls erforderlich, sichergestellt, daß das Dekor auch an den Längs- und Querseiten über gerade ausgeführte Klemmstücke vorspannbar ist

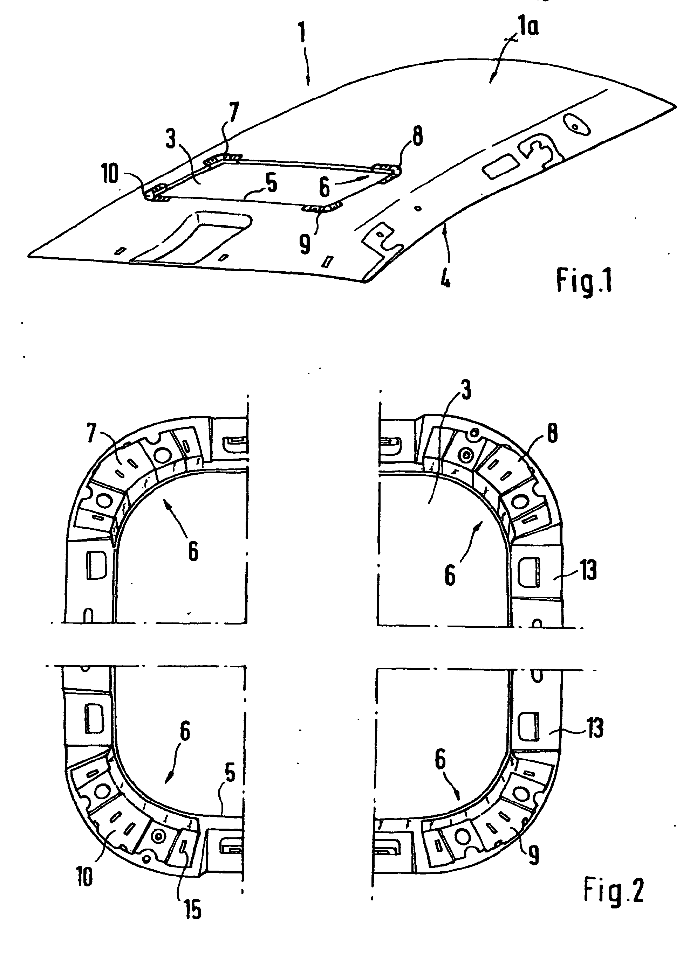

Ausführungsbeispiele der Erfindung sind in den Zeichnungen dargestellt und werden im folgenden näher beschrieben.
Es zeigen
- Fig. 1: eine schaubildliche Darstellung eines geformten Himmelelements mit angedeuteten Klemmstücken,
- Fig. 2: eine Draufsicht auf die eckseitig des Ausschnitts angeordneten Klemmstücke,
- Fig. 3: eine schaubildliche Darstellung einer ersten Ausführung eines Klemmstücks,
- Fig. 4: eine schaubildliche Darstellung einer zweiten Ausführung eines Klemmstücks,

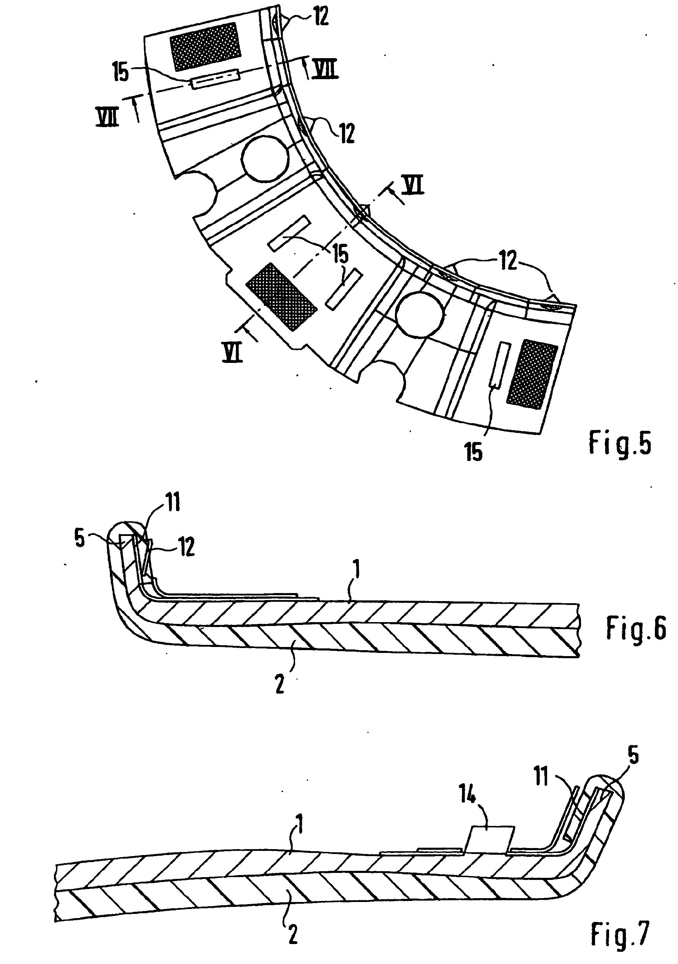

- Fig. 5: eine Draufsicht auf ein Klemmstück der Ausführung gem. Fig. 3,
- Fig. 6: einen Schnitt durch das Klemmstück nach der Linie VI-VI der Fig. 5 und
- Fig. 7: einen Schnitt durch das Klemmstück nach der Linie VII-VII der Fig. 5.

In einem Kraftfahrzeug ist ein sogenanntes geformtes meist einteiliges Himmelelement 1 eingesetzt, das innenseitig, das heißt, im Innenraum des Kraftfahrzeugs, mit einer Himmelverkleidung 2 beispielsweise aus Kunstleder, wie Alcantara (R) oder aus Leder verkleidet ist. Bei einem Fahrzeug mit einem Schiebedach ist im Fahrzeugdach des Aufbaus sowie im eingesetzten Himmelelement 1, jeweils ein Ausschnitt 3, welches eine Schiebedachöffnung bildet, vorgesehen.

Die Himmelverkleidung 2 bedeckt die Innenfläche 4 des Himmelelements 1 und wird um die umlaufende Kante bzw. um den umlaufenden aufrecht stehenden Rand 5 des Ausschnitts 3 für das Schiebedach herumgezogen und innenseitig des Schenkels 11 rundherum verklebt.

In den ausgerundeten Eckbereichen 6 des Ausschnitts 3 wird die Himmelverkleidung 2 zusätzlich über Klemmstücke 7, 8, 9 und 10 vorgespannt gehalten, damit ein sattes Anliegen in diesen Eckbereichen 6 erzielt werden kann.

Hierzu sind die Klemmstücke 7 bis 10 winkelförmig ausgebildet und weisen einen dem aufrecht stehenden Rand 5 des Ausschnitts 3 parallel liegenden Schenkel 11 auf, der dem Schenkel 5 zugerichtete Zacken 12 aufweist. Diese Zacken 12 haken sich in die Himmelverkleidung 2 ein und halten die Verkleidung 2 in einer vorgespannten Position, so daß auch bei Wärmebeeinflussung keine Lageveränderung des Himmels in diesen Eckbereichen 6 eintreten kann und die Himmelverkleidung 2 angepreßt mit dem Rand 5 verbunden ist

Die Klemmstücke 7 bis 10 sind entweder direkt mit dem Himmelelement 1 verbunden oder es ist mit einem Klemmrahmen 13, der am Himmelelement 1 befestigt ist, verbunden. Eine Verbindung der Klemmstücke 7 bis 10 mit dem Klemmrahmen 13 erfolgt vorzugsweise über rahmenseitige Befestigungslaschen 14, die in Schlitze 15 des Klemmstücks 7 bis 10 hineinragen und zur Festlegung der Klemmstücke 7 bis 10 umgebogen werden.

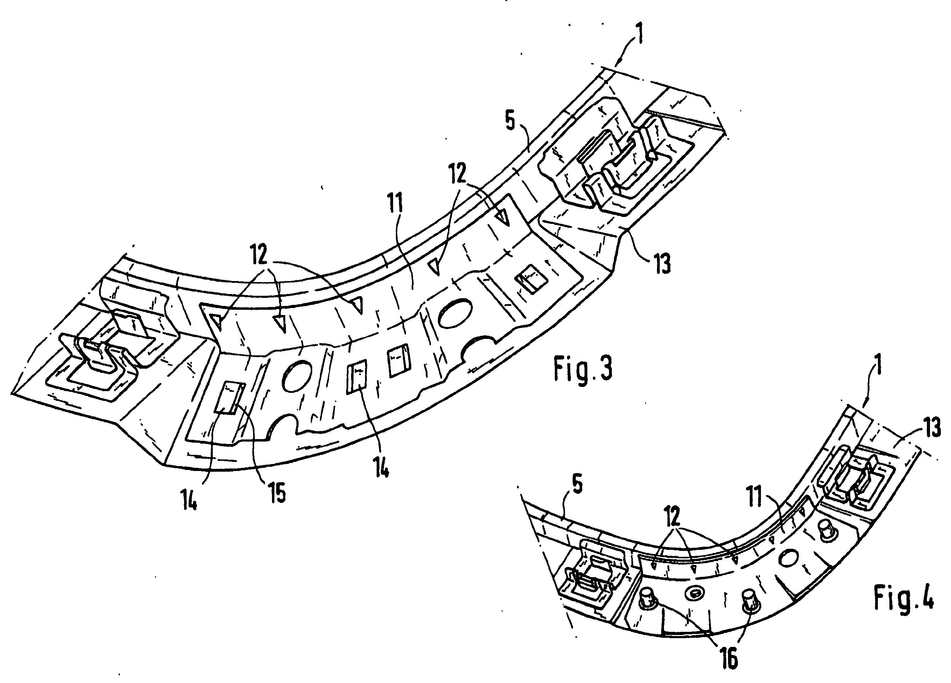

Nach einer weiteren Ausführung gem. Fig. 4 können die Klemmstücke 7 bis 10 auch über rahmenseitige Schraubbolzen 16 befestigt werden, auf die dann Schraubmuttern aufgesetzt und festgespannt werden.

Klemmstücke können auch, falls dies erforderlich ist, an den Längs- und Querseiten des Ausschnitts 3 angeordnet werden, um eine gewisse Vorspannung auf die Himmelverkleidung 2 auch in diesen Bereichen auszuüben. In diesem Fall sind die Klemmstücke dann geradlinig ausgeführt.

## Patentansprüche

1. Vorrichtung zum Festlegen einer Himmelverkleidung (2) aus Leder oder Kunstleder in einem Dachausschnitt (3) für ein Schiebedach, der in einem geformten Himmelelement (1) angeordnet ist, das in ein Fahrzeugdach einsetzbar ist, wobei die Himmelverkleidung (2) um einen hochgestellten Rand (5) des Dachausschnitts (3) herumgezogen und am geformten Himmelelement (1) verklebbar ist, **dadurch gekennzeichnet, daß** eckseitig des ausgerundeten Dachausschnitts (3) des Himmelelements (1) Klemmstücke (7 bis 10) an der Außenseite (1a) des Himmetelements (1) angeordnet sind, welche aus einem Winkelprofil bestehen, wobei jeweils zwischen einem hochgestellten Schenkel (11) des Klemmstücks (7 bis 10) und dem Rand (5) des Dachausschnitts (3) die Himmelverkleidung (2) gehalten ist.

2. Vorrichtung nach Anspruch 1, **dadurch gekennzeichnet, daß** das Klemmstück (7 bis 10) in seinem Schenkel (11) jeweils dem hochgestellten Rand (5) des Himmelelements (1) zugerichtete Zacken (12) aufweist, in welche die Verkleidung (2), dem eckseitig ausgerundeten Formverlauf des Dachausschnitts (3) anliegend folgend, gehalten ist

3. Vorrichtung nach den Ansprüchen 1 oder 2, **dadurch gekennzeichnet, daß** das Klemmstück (7 bis 10) mit dem Himmelelement (1) unter Zwischenschaltung eines an diesem befestigten Klemmrahmen (13) verbunden ist, der mehrere umbiegbare Befesägungslascherr (14) umfaßt, die korrespondierend mit Schlitzen (15) des Klemmstückes (7 bis 10) angeordnet sind.

4. Vorrichtung nach Anspruch 1, **dadurch gekennzeichnet, daß** wenigstens an einem gerade verlaufenden Randbereich des Ausschnitts (3) gerade Klemmstücke und an den ausgerundeten Eckbereichen (6) des Ausschnitts etwa einen Viertelkreisbogen bildende weitere Klemmstücke (7 bis 10) angeordnet sind.

5. Vorrichtung nach einem der vorhergehenden Ansprüche, **dadurch gekennzeichnet, daß** die Klemmstücke (7 bis 10) auf dem Klemmrahmen (13) über Bolzen (16) mit Schraubmuttern oder Nieten gehalten sind.

## Claims

1. An apparatus for fastening a ceiling trim (2) of leather or artificial leather in a roof aperture (3) for a sliding roof which is arranged in a shaped ceiling element (1) which can be inserted into a vehicle roof, wherein the ceiling trim (2) is drawn around a raised rim (5) of the roof aperture (3) and can be secured by adhesion to the shaped ceiling element (1), **characterized in that** at the corners of the rounded roof aperture (3) of the ceiling element (1) clamping pieces (7 to 10), which comprise an angled profile, are arranged on the outside (1a) of the ceiling element (1), wherein the ceiling trim (2) is held between a raised arm (11) of the clamping piece (7 to 10) and the rim (5) of the roof aperture (3) in each case.

2. An apparatus according to Claim 1, **characterized in that** in its arm (11) the clamping piece (7 to 10) has prongs (12) which are directed in each case towards the raised rim (5) of the ceiling element (1) and in which the trim (2) is held following, in an abutting manner, the shape of the roof aperture (3) which is rounded at the corners.

3. An apparatus according to Claims 1 or 2, **characterized in that** the clamping piece (7 to 10) is connected to the ceiling element (1) with the interposition of a clamping frame (13) which is fastened to the latter and which comprises a plurality of fastening plates (14) which can be bent over and which are arranged so as to correspond to slots (15) in the clamping piece (7 to 10).

4. An apparatus according to Claim 1, **characterized in that** straight clamping pieces are arranged at least on a rim region, extending straight, of the aperture (3) and further clamping pieces (7 to 10) forming substantially a quarter circle are arranged on the rounded corner regions (6) of the aperture.

5. An apparatus according to any one of the preceding Claims, **characterized in that** the clamping pieces (7 to 10) are held on the clamping frame (13) by way of bolts (16) with screw nuts or rivets.

## Revendications

1. Dispositif pour fixer un habillage de plafond (2) en cuir ou en cuir synthétique dans une découpe de toit (3) pour un toit coulissant, qui est disposée dans un élément de plafond (1) préformé qui peut être inséré dans un toit de véhicule, l'habillage de plafond (2) étant relevé autour d'un bord (5) vertical de la découpe de toit (3) et pouvant être collé sur l'élément de plafond (1) préformé, **caractérisé en ce que** côté angles de la découpe de toit (3) arrondie de l'élément de plafond (1) sont disposées des pièces de serrage (7 à 10) sur le côté extérieur (1a) de l'élément de plafond (1), lesquelles sont constituées d'un profilé de cornière, l'habillage de plafond (2) étant maintenu entre chaque côté (11) relevé de la pièce de serrage (7 à 10) et le bord (5) de la découpe de toit (3).

2. Dispositif selon la revendication 1, **caractérisé en ce que** la pièce de serrage (7 à 10) comporte dans son côté (11) des dents (12), dirigées vers le bord (5) relevé de l'élément de plafond (1), dans lesquelles l'habillage (2) est maintenu en épousant la forme arrondie aux angles de la découpe de toit (3).

3. Dispositif selon les revendications 1 ou 2, **caractérisé en ce que** la pièce de serrage (7 à 10) est reliée à l'élément de plafond (1), avec interposition d'un cadre de serrage (13) fixé à celui-ci, et qui comprend plusieurs pattes de fixation (14) pouvant être repliées disposées en correspondance avec des fentes (15) de la pièce de serrage (7 à 10).

4. Dispositif selon la revendication 1, **caractérisé en ce qu'**au moins dans une zone de bordure s'étendant en ligne droite de la découpe (3) sont disposées des pièces de serrage droites et dans les zones d'angle (6) arrondies de la découpe sont disposées d'autres pièces de serrage (7 à 10) formant un arc en quart de cercle.

5. Dispositif selon l'une des revendications précédentes, **caractérisé en ce que** les pièces de serrage (7 à 10) sont maintenues sur le cadre de serrage (13) par des boulons avec des écrous ou des rivets.
